# FASCICULE DE BREVET EUROPEEN

(11) **EP 0 785 693 B1**
(45) Date de publication et mention de la délivrance du brevet: **17.04.2002**
(21) Numéro de dépôt: 97400069.7
(22) Date de dépôt: 15.01.1997
(51) Int. Cl.: H04Q 7/24, H04Q 7/38

(54) **Protocole d'acheminement local d'appels entrants du réseau téléphonique commuté dans un réseau cellulaire**
Protokoll zur lokalen Leitweglenkung für aus dem öffentlichen Fernsprechnetz ankommende Anrufe in einem zellularen Netz
Protocol for local routing of incoming calls from the public switched telephone network to a cellular network

(30) Priorité: 18.01.1996 FR 9600538
(43) Date de publication de la demande: 23.07.1997
(73) Titulaire: FRANCE TELECOM, 75015 Paris (FR)
(72) Inventeur: Despres, François, 91570 Bievres (FR); Blondeau, Olivier, 78120 Rambouillet (FR)
(74) Mandataire: Fréchède, Michel

(56) Documents cités:
- EP-A- 0 520 194
- US-A- 5 325 424
- IEEE JOURNAL ON SELECTED AREAS IN COMMUNICATIONS, vol. 13, no. 5, 1 Juin 1995, pages 923-931, XP000499098 FOO C J H ET AL: "TWO-WAY CALLING PUBLIC CT2 TELEPOINT SYSTEM"
- ELECTRICAL COMMUNICATION, vol. 64, no. 1, 1 Juillet 1990, pages 85-94, XP000136340 BETTS R ET AL: "ISDN AND INTELLIGENT NETWORK BASED TELEPOINT SERVICE"

## Description

A l'heure actuelle, les réseaux de téléphonie cellulaire sont en plein développement.

Une raison de leur essor est, outre l'accès auprès d'abonnés de ce type de réseau, l'accès de manière sensiblement transparente auprès d'abonnés du réseau téléphonique public commuté, et réciproquement. Un tel réseau est décrit dans FOO CJH et al: TWO-WAY CALLING PUBLIC CT2 TELEPOINT SYSTEM, IEEE JOURNAL ON SELECTED AREAS IN COMMUNICATIONS, 1995, Vol. 13, n°.5, pages 923-931.

Contrairement au réseau téléphonique public commuté, un réseau de téléphonie cellulaire est constitué, ainsi que représenté en figure la, par au moins un émetteur-récepteur radio ERR, par abonné mobile, en liaison hertzienne avec une pluralité de bornes fixes radio BFR₁ à BFR₃, interconnectées en structure arborescente par des unités de raccordement de bornes URB à un centre d'authentification d'abonné mobile CAP, l'ensemble constituant le réseau de téléphonie cellulaire proprement dit.

L'interconnexion entre le combiné téléphonique CTA d'un abonné du réseau téléphonique public commuté RTPC est assurée par une unité d'accès au réseau de téléphonie mobile (UAP).

Dans les réseaux de téléphonie cellulaire actuels, tel que le réseau de téléphonie cellulaire POINTEL en Europe, une procédure ou protocole d'acheminement d'appels entrants sur le réseau de téléphonie cellulaire, en provenance du réseau téléphonique public commuté, met en oeuvre des opérations spécifiques, rendues nécessaires en raison de la configuration même du réseau de téléphonie cellulaire.

En premier lieu, le protocole précité nécessite, de manière classique, une procédure de localisation de chaque abonné mobile dans le réseau de téléphonie mobile.

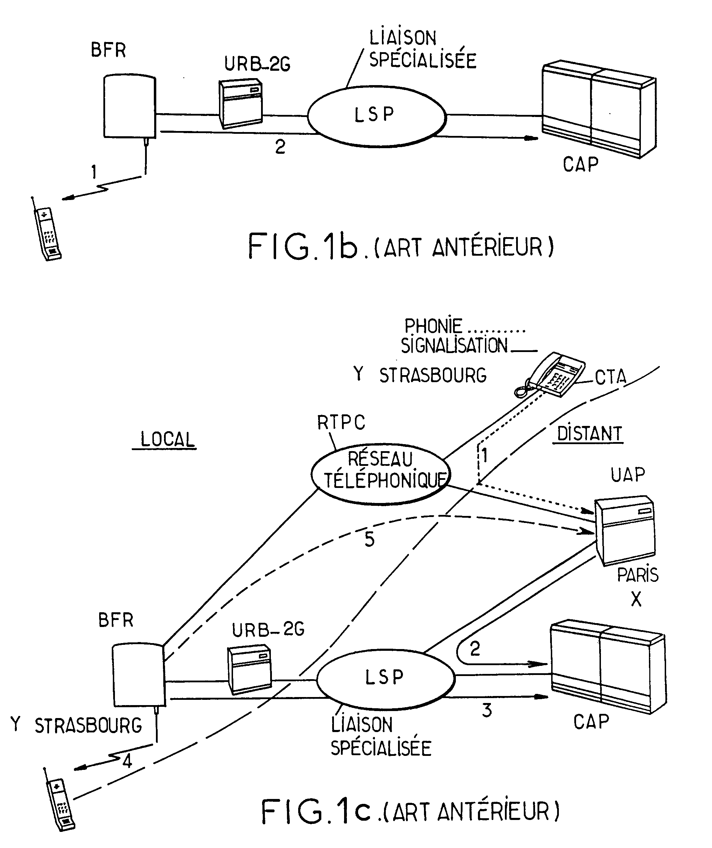

On rappelle, en liaison avec la figure 1b, qu'une telle procédure implique successivement :
- l'envoi par l'abonné mobile d'une requête 1 de localisation ;
- la transmission 2 via la BFR, l'URB concernée et un réseau de ligne de transmission spécialisée de cette requête vers le centre d'authentification d'abonné mobile CAP ;
- la vérification des droits d'accès, puis la mémorisation, par le CAP, de l'adresse réseau ou identité de la borne BFR identifiée comme borne de localisation, afin de permettre à ce dernier d'acheminer tout appel entrant ultérieur vers cet abonné mobile.

Lors de l'apparition d'un tel appel entrant, celui-ci, en référence à la figure la, est géré par l'unité d'accès au réseau de téléphonie mobile UAP, à partir d'une base de données permettant de connaître toutes les bornes BFR filles, interconnectées à la même unité de raccordement de bornes, URB.

Un tel protocole de gestion d'un appel entrant est résumé ci-après en liaison avec la figure la et implique, grâce à l'émission de requêtes ou messages successifs où les lignes en pointillé représentent la transmission de messages en phonie et les lignes continues la transmission de messages par liaison spécialisée, les étapes ci-après :
1. L'ERR est supposé localisé au voisinage de la borne de localisation BFR₁. Par exemple, l'appelant du réseau téléphonique public commuté compose le numéro d'appel de l'appelé mobile, lequel est transmis vers l'UAP, constituant, au niveau de l'UAP, un premier demi-appel.
2. L'UAP indique au CAP, disposant des paramètres de localisation de l'abonné mobile appelé, qu'il existe une requête d'appel à destination de cet abonné mobile et communique au centre d'authentification d'abonné mobile CAP un numéro de rappel de l'abonné mobile.
3. Le CAP appelle l'URB de rattachement de la borne de localisation BFR₁ en indiquant le numéro de rappel.
4. L'URB indique à la borne de localisation BFR1 que l'émetteur-récepteur ERR de numéro de rappel correspondant de cet abonné mobile est recherché.
5. La borne de localisation BFR₁ entame une procédure de scrutation (*polling* en langage anglo-saxon) pour rechercher par émission de messages d'appel l'émetteur-récepteur ERR de cet abonné mobile sur la liaison hertzienne. Au bout d'un temps déterminé, de l'ordre de quelques secondes, en l'absence de réponse de l'abonné mobile concerné, la borne de localisation BFR₁ envoie à son URB de raccordement un compte-rendu négatif. La procédure d'appel de la borne de localisation constitue un deuxième demi-appel.
6 et 6'. L'URB de raccordement adresse à chacune des bornes filles BFR₂, BFR₃ distinctes de la borne de localisation BFR₁ simultanément, une requête de recherche de l'émetteur-récepteur ERR de l'abonné mobile au numéro de rappel correspondant.
7. Chaque borne fille entame une procédure de polling semblable à celle de l'étape 5 préalablement conduite par la borne de localisation, chaque appel constituant un deuxième demi-appel.
7'. Lorsqu'une borne fille BFR₂, BFR₃ a trouvé l'émetteur-récepteur de l'abonné mobile concerné, c'est-à-dire lorsqu'un message d'accusé de réception du dernier appel engendré par celle-ci est reçu en retour, cette dernière fait sonner l'émetteur-récepteur ERR pour appeler l'abonné mobile utilisateur.
8. Lorsque cet abonné-mobile utilisateur décroche son émetteur-récepteur ERR, la borne fille précitée, BFR₂ par exemple, rappelle l'UAP, via l'URB de raccordement et un réseau de télécommunication spécialisé, l'UAP procédant alors à l'aboutement des deux demi-appels.

Le protocole précité présente des inconvénients, liés essentiellement à la structure même du réseau de radiotéléphonie mobile. Parmi ces inconvénients, on peut citer en premier lieu le fait que la gestion des bornes filles se fait manuellement, lors de l'adjonction d'une ou plusieurs bornes BFR.

On peut citer en outre le fait que la localisation et les appels entrants dans le réseau de téléphonie mobile sont gérés par des équipements spécifiques de ce dernier.

On peut citer enfin le fait que les solutions mises en oeuvre dans le réseau de téléphonie mobile ne permettent pas d'éviter l'effet dit effet *"trombone",* tel qu'illustré en figure 1c. Si, ainsi que représenté sur la figure 1c précitée, un abonné mobile d'une ville X, Paris, en déplacement dans une ville Y, Strasbourg, se localise temporairement, par le protocole précédemment décrit, dans la ville Y, Strasbourg, un appel entrant issu d'un abonné du réseau téléphonique public commuté et destiné à cet abonné mobile va nécessairement passer par la ville X, Paris. C'est en particulier le cas pour un appel entrant émanant d'un abonné du réseau téléphonique public commuté, localisé dans la ville Y, Strasbourg, pour lequel un tel appel doit transiter par la ville X, Paris, en utilisant inutilement des ressources du réseau téléphonique commuté. D'où la notion d'effet *"trombone"* illustrant le trajet aller-retour de l'appel entre les villes Y, Strasbourg, et X, Paris.

Un tel cheminement des appels téléphoniques entrants induit en outre des surcoûts pour les utilisateurs.

La présente invention a pour but de remédier aux inconvénients précédemment mentionnés.

Un autre objet de la présente invention est l'optimisation de la gestion des abonnés mobiles d'un réseau de téléphonie cellulaire, grâce à l'utilisation des services et infrastructures du réseau téléphonique public commuté, notamment du service de communications personnelles du réseau téléphonique commuté et de la fonction de Sélection Directe à l'Arrivée, S.D.A., du réseau numérique à intégration de services, RNIS.

Le protocole d'acheminement local d'appels entrants engendrés par le combiné téléphonique d'un abonné du réseau public commuté dans un réseau de téléphonie cellulaire, objet de la présente invention, est mis en oeuvre lorsque le combiné téléphonique est interconnecté à une unité d'accès au réseau de téléphonie mobile constituée par un commutateur d'accès local aux services d'un réseau numérique à intégration de services, le réseau téléphonique cellulaire comportant au moins un émetteur-récepteur abonné mobile muni d'un numéro d'appel téléphonique, vers lequel l'appel entrant est adressé, et une pluralité de bornes fixes radio interconnectées en grappes selon une structure arborescente à des unités de raccordement et à un centre d'authentification d'abonné mobile par des lignes de transmission numérique spécialisées. Les bornes fixes radio sont munies de canaux de transmission en radiotéléphonie cellulaire, comportent chacune un ensemble de numéro de sélection directe à l'arrivée et sont chacune reliées à un centre d'authentification d'accès aux services par l'intermédiaire du commutateur d'accès local aux services, d'un point de commande de services et d'un serveur vocal de localisation. L'émetteur-récepteur abonné mobile est en outre équipé de moyens d'accès au service de communications personnelles du réseau téléphonique commuté à partir d'un numéro d'identification et d'un code confidentiel, le numéro d'appel téléphonique, le numéro d'identification et le code confidentiel étant attribués à l'émetteur-récepteur abonné mobile.

Selon un aspect particulièrement remarquable, le protocole selon l'invention consiste à
- effectuer, à partir de l'émetteur-récepteur abonné mobile, une procédure de localisation-authentification de cet émetteur-récepteur, par l'intermédiaire du réseau de téléphonie mobile et du centre d'authentification d'abonné mobile, et, sur localisation-authentification de l'émetteur-récepteur abonné mobile auprès d'une borne fixe radio de localisation,
- transmettre à la borne fixe radio de localisation, à partir du centre d'authentification d'abonné mobile, les données d'abonnement au service de communications personnelles, numéro d'identification et code confidentiel de l'émetteur-récepteur abonné mobile, attribuer en outre, au niveau de la borne fixe radio, à cet émetteur-récepteur abonné mobile, un numéro libre de sélection directe à l'arrivée,
- transmettre au centre d'authentification d'accès aux services, par l'intermédiaire du serveur vocal de localisation, à partir de la borne de localisation, le numéro de sélection directe à l'arrivée attribué, le numéro d'identification et le code confidentiel, l'adresse de la borne fixe radio de localisation associée à l'émetteur-récepteur abonné mobile étant mémorisée au niveau du centre d'authentification d'accès aux services, et sur appel entrant du numéro d'appel téléphonique de cet émetteur-récepteur abonné mobile engendré par ce combiné téléphonique commuté vers le point de commande de services,
- transmettre du point de commande de services vers le centre d'authentification d'accès aux services un message d'interrogation comportant au moins le numéro téléphonique de l'émetteur-récepteur abonné mobile,
- transmettre sur réception de ce message d'interrogation, à partir du centre d'authentification d'accès aux services, par l'intermédiaire du point de commande de services un message d'appel contenant au moins le numéro de sélection directe à l'arrivée attribué vers la borne fixe de localisation,
- effectuer à partir de la borne fixe radio de localisation une procédure d'appel de l'émetteur-récepteur abonné mobile, et, sur réponse de l'abonné mobile,
- établir la communication avec le combiné téléphonique.
Ceci permet de confiner la transaction entre le combiné téléphonique et l'émetteur-récepteur abonné mobile au seul réseau géré par le commutateur d'accès local aux services du réseau numérique à intégration de services.

Le protocole, objet de la présente invention, trouve application à la gestion des réseaux de téléphonie mobile dans lesquels les bornes fixes radio sont munies de canaux de transmission en radiotéléphonie mobile, de service de communications personnelles du réseau téléphonique commuté et de la fonction S.D.A. du réseau numérique à intégration de services RNIS.

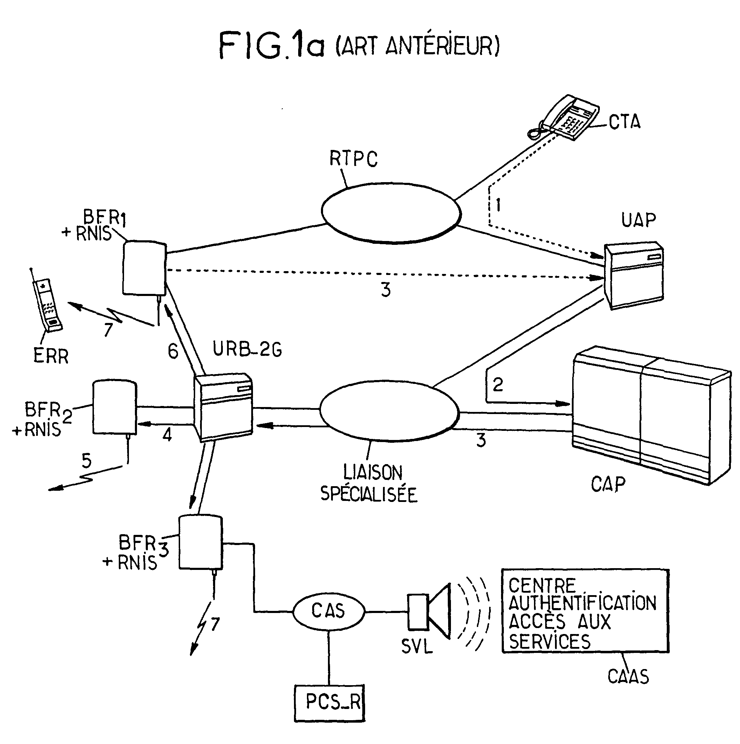

Il sera mieux compris à la lecture de la description et à l'observation des dessins ci-après dans lesquels, outre les figures 1a, 1b, 1c relatives à l'art antérieur,
- la figure 2 représente un organigramme illustratif du protocole d'acheminement local d'appels entrants du réseau téléphonique commuté dans un réseau de téléphonie cellulaire ;
- la figure 3a représente un mode de réalisation particulier non limitatif de l'étape d'initialisation sur localisation-authentification de la figure 2 ;
- la figure 3b représente un mode de réalisation particulier non limitatif de l'étape d'acheminement proprement dit de la figure 2 ;
- la figure 4a représente la structure de différents messages permettant de réaliser les transactions 2 et 3 de l'étape d'initialisation-authentification de la figure 3a ;
- la figure 4b représente la structure de différents messages permettant de réaliser la transaction 2 de l'étape d'acheminement proprement dit de la figure 3b.

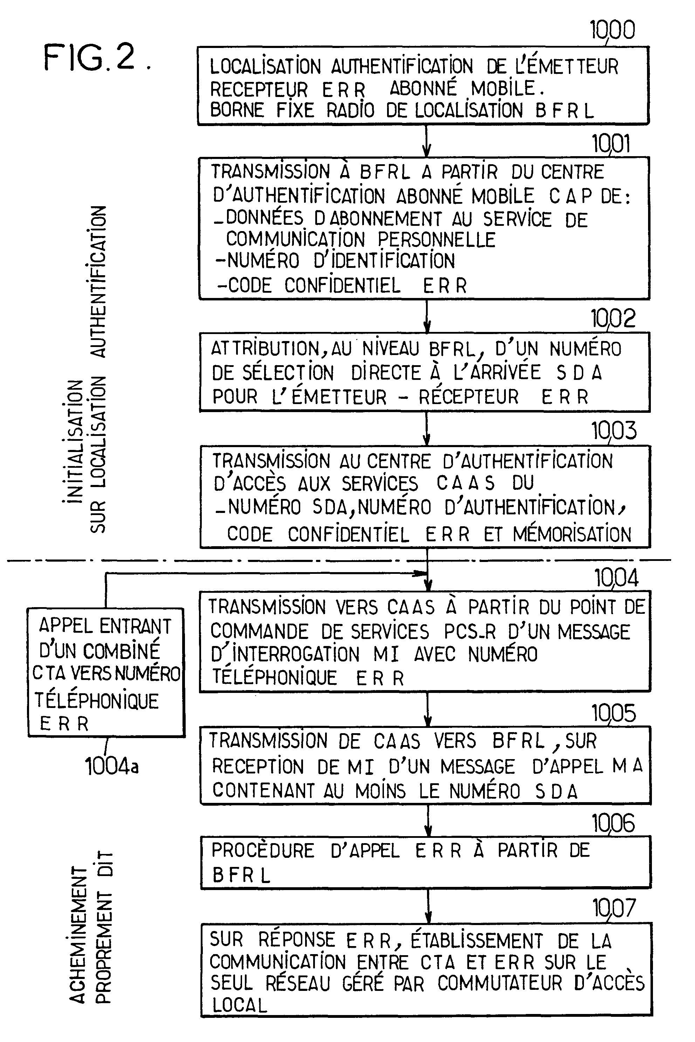

Une description plus détaillée du protocole d'acheminement local d'appels entrants du réseau téléphonique commuté dans un réseau cellulaire, objet de la présente invention, sera maintenant donnée en liaison avec la figure 2.

Préalablement à la description du protocole d'acheminement local d'appels entrants conforme à l'objet de la présente invention, un rappel des éléments matériels du réseau de téléphonie cellulaire et du réseau téléphonique public commuté, permettant la mise en oeuvre du protocole précité, sera donné en liaison avec la figure la précédemment mentionnée.

Ainsi que représenté sur la figure 1a, tout combiné téléphonique d'un abonné du réseau public commuté, portant la référence CTA, est interconnecté à une unité d'accès au réseau de téléphonie mobile, notée UAP. Cette unité est généralement constituée par un commutateur d'accès local aux services d'un réseau numérique à intégration de services par exemple. Le réseau téléphonique cellulaire comporte au moins un émetteur-récepteur, noté ERR, dont un abonné mobile est titulaire, cet émetteur-récepteur ERR étant muni d'un numéro d'appel téléphonique vers lequel bien entendu l'appel entrant engendré par le combiné téléphonique CTA doit être adressé. Le réseau téléphonique cellulaire comprend également une pluralité de bornes fixes radio, notées sur la figure la BFR₁ à BFR₃, ces bornes fixes radio étant interconnectées en grappes selon une structure arborescente à une unité de raccordement notée URB-2G. Bien entendu, pour constituer un réseau, il existe plusieurs unités de raccordement URB-2G, chacune regroupant un certain nombre de bornes fixes radio connectées en grappes. Chaque unité de raccordement URB-2G est reliée à un centre d'authentification d'abonné mobile, noté CAP, par l'intermédiaire de lignes de transmission numérique spécialisées, ou liaisons spécialisées. En outre, l'unité d'accès au réseau de téléphonie mobile UAP est également reliée au centre d'authentification CAP par une liaison spécialisée semblable.

De manière spécifique, on indique que chaque borne fixe radio BFR₁ à BFR₃ est munie de canaux de transmission en radiotéléphonie cellulaire permettant l'envoi et la réception de messages radio vers l'émetteur-récepteur radio ERR ainsi que de services de communications personnelles du réseau téléphonique commuté et de la fonction S.D.A. du réseau numérique à intégration de services, dénoté RNIS. L'abonné mobile et l'émetteur-récepteur ERR dont ce dernier dispose sont réputés munis d'une ressource d'accès aux services de communications personnelles SCP du réseau téléphonique commuté. Chaque borne fixe radio précédemment citée comporte un ensemble de numéros de sélection directe à l'arrivée, numéros SDA, et sont chacune reliées à un centre d'authentification d'accès aux services, notés CAAS sur la figure la, par l'intermédiaire d'un commutateur d'accès local aux services, noté CAS, d'un point de commande de services PCS-R et d'un serveur vocal de localisation noté SVL. L'équipement de chaque borne fixe radio en infrastructure permettant l'accès aux services SCP du réseau téléphonique commuté est classique et, à ce titre, ne sera pas décrit en détail.

L'émetteur-récepteur abonné mobile ERR est en outre équipé de moyens d'accès aux services SCP du réseau téléphonique commuté à partir d'un numéro d'identification et d'un code confidentiel. On comprend bien sûr que le numéro d'identification et le code confidentiel précités sont ainsi attribués à l'émetteur-récepteur abonné mobile ERR. Ainsi, l'abonné mobile titulaire de l'émetteur-récepteur ERR dispose-t-il de paramètres d'accès aux services SCP, par l'intermédiaire du réseau téléphonique commuté, ces paramètres étant constitués par le numéro d'identification et le code confidentiel, ainsi que d'un numéro de téléphone sous lequel ce dernier est susceptible d'être joint par l'intermédiaire du réseau de téléphonie mobile.

Compte tenu des éléments précédemment décrits et ainsi qu'il sera maintenant expliqué en détail en relation avec la figure 2, le protocole objet de la présente invention comprend une première étape, dite d'initialisation sur localisation-authentification de l'abonné mobile, cette première étape étant suivie d'une deuxième étape d'acheminement proprement dit d'un appel entrant vers l'abonné mobile qui s'est soumis au processus d'initialisation sur localisation-authentification précité.

Ainsi qu'on l'observera sur la figure 2, l'étape d'initialisation sur localisation-authentification consiste à effectuer, en une étape notée 1000, à partir de l'émetteur-récepteur abonné mobile ERR, une procédure de localisation-authentification par l'intermédiaire du réseau de téléphonie mobile et du centre d'authentification d'abonné mobile CAP. Cette étape 1000 a pour effet, sur localisation-authentification de l'émetteur-récepteur ERR abonné mobile, de déterminer une borne fixe radio, dite de localisation, désignée par BFRL. On comprend bien sûr, en référence avec la figure la, que la borne fixe radio de localisation BFRL peut être, en fonction de la localisation de l'abonné mobile et de l'émetteur-récepteur ERR qui lui est dévolu, l'une des bornes fixes radio représentées en figure 1a. L'étape 1000 de localisation-authentification de l'émetteur-récepteur ERR peut être réalisée de manière classique, ainsi qu'il sera décrit de manière plus détaillée ultérieurement dans la description. On comprend en particulier que l'étape 1000 précitée, pour assurer la détermination d'une borne fixe radio de localisation BFRL, peut comprendre une sous-étape dans laquelle l'émetteur-récepteur radio ERR de l'abonné mobile correspondant est authentifié par le centre d'authentification d'abonné mobile CAP.

L'étape 1000 précitée est alors suivie d'une étape 1001, laquelle consiste à transmettre à la borne fixe radio de localisation BFRL, à partir du centre d'authentification d'abonné mobile CAP, les données d'abonnement aux services de communication personnelle SCP ainsi que le numéro d'identification et le code confidentiel de l'émetteur-récepteur radio ERR abonné mobile correspondant.

L'étape 1001 précitée est alors suivie d'une étape 1002 consistant à attribuer, au niveau de la borne fixe radio de localisation BFRL, un numéro de sélection directe à l'arrivée SDA, ce numéro SDA étant un numéro attribué par le réseau RNIS. On indique que le numéro SDA est un numéro libre pour la borne fixe radio de localisation BFRL et que ce numéro est attribué temporairement pour l'émetteur-récepteur ERR, ainsi qu'il sera décrit ultérieurement dans la description.

L'étape 1002 précitée est alors suivie d'une étape 1003 consistant à transmettre, à partir de la borne fixe radio de localisation BFRL vers le centre d'authentification d'accès aux services CAAS par l'intermédiaire du serveur vocal de localisation SVL, le numéro SDA, le numéro d'authentification et le code confidentiel d'accès aux services SCP de l'émetteur-récepteur ERR précédemment mentionné.

L'étape 1003 de transmission précédemment citée, vers le centre d'authentification d'accès CAAS, est effectuée par l'intermédiaire du centre d'accès aux services CAAS et du point de commande de services PSC-R par l'intermédiaire du serveur vocal de localisation SVL. Le serveur vocal de localisation SVL enregistre alors la localisation de l'abonné mobile, les paramètres de localisation consistant plus particulièrement en le numéro d'appel SDA pour la borne fixe radio de localisation BFRL.

Sur occurrence d'un appel entrant émanant d'un combiné téléphonique CTA vers le numéro téléphonique ERR, cette occurrence portant la référence 1004a sur la figure 2, le protocole objet de la présente invention consiste alors, dans une étape d'acheminement proprement dit de cet appel entrant, à effectuer une étape notée 1004b, consistant à transmettre, à partir du point de commande de services PCS-R vers le centre d'authentification d'accès aux services CAAS un message d'interrogation, noté MI. Ce message d'interrogation MI comporte au moins le numéro téléphonique de l'émetteur-récepteur radio ERR de l'abonné mobile appelé. Bien entendu, grâce à l'étape 1003 précédemment mentionnée dans la description, le centre d'authentification d'accès aux services CAAS, connaissant les paramètres de localisation courante et d'accès aux services SCP de l'abonné mobile et de l'émetteur-récepteur ERR qui lui est associé, permet ensuite, en une étape 1005, la transmission vers la borne fixe de localisation BFRL, sur réception du message MI précité, d'un message d'appel MA contenant au moins le numéro SDA attribué à l'abonné mobile et à l'émetteur récepteur ERR auprès de la borne fixe de localisation BFRL. L'étape 1005 précédemment mentionnée est alors suivie d'une étape 1006 consistant en une procédure d'appel de l'émetteur-récepteur radio ERR par le canal radio du réseau téléphonique mobile à partir de la borne fixe radio de localisation BFRL. Bien entendu, au cours de cette procédure d'appel, la borne BFRL recherche périodiquement, par une action de scrutation connue sous le nom de "*polling*", l'émetteur-récepteur ERR et fait sonner ce dernier.

Sur réponse à la procédure d'appel 1006 par l'émetteur-récepteur radio ERR, l'étape 1006 précitée est alors suivie d'une étape 1007 consistant à établir la communication entre le combiné téléphonique CTA et l'émetteur-récepteur radio ERR, cette communication étant établie sur le seul réseau, c'est-à-dire au niveau local, réseau géré par le commutateur d'accès local CAAS.

D'une manière générale, on comprend que le protocole d'acheminement local d'appels entrants engendrés par le combiné téléphonique d'un abonné du réseau public commuté dans un réseau téléphonique de téléphonie cellulaire conforme à l'objet de la présente invention, met en oeuvre l'utilisation de la gestion des numéros SDA du réseau RNIS afin de gérer les appels entrants vers les abonnés mobiles du réseau de téléphonie mobile comme des abonnés fixes temporaires. En fait, tout abonné mobile muni d'un émetteur-récepteur radio ERR et procédant à l'enregistrement de ces paramètres d'accès aux services SCP devient en fait, et de manière totalement transparente pour tout abonné du réseau téléphonique public commuté disposant d'un combiné CTA, un abonné au service des numéros SDA de la borne fixe radio, borne de localisation, auprès de laquelle l'abonné mobile a procédé à sa localisation.

On comprend également que, grâce à l'utilisation particulière des numéros SDA du réseau RNIS, cette utilisation étant combinée avec le service SCP du réseau téléphonique commuté, conformément au protocole d'acheminement local d'appels entrants objet de la présente invention, ce protocole permet d'obtenir un numéro unique pour appeler les émetteurs-récepteurs ERR des abonnés mobiles quel que soit l'endroit où ceux-ci sont géographiquement localisés en l'absence totale d'effet *"trombone"* dans le réseau téléphonique public commuté.

En d'autres termes et en référence à la figure 1c, pour tout appel émanant d'un combiné téléphonique CTA du réseau téléphonique public commuté à partir d'un site géographique donné vers un abonné mobile qui a procédé à une étape de localisation auprès d'une borne fixe radio située dans le même site géographique, l'aboutement des deux appels, grâce à l'attribution temporaire d'un numéro SDA à l'abonné mobile précité auprès de la borne fixe radio BFRL de localisation, ne nécessite plus le transit de l'appel par l'intermédiaire de l'unité d'accès au réseau mobile UAP situé dans un autre site géographique totalement distinct.

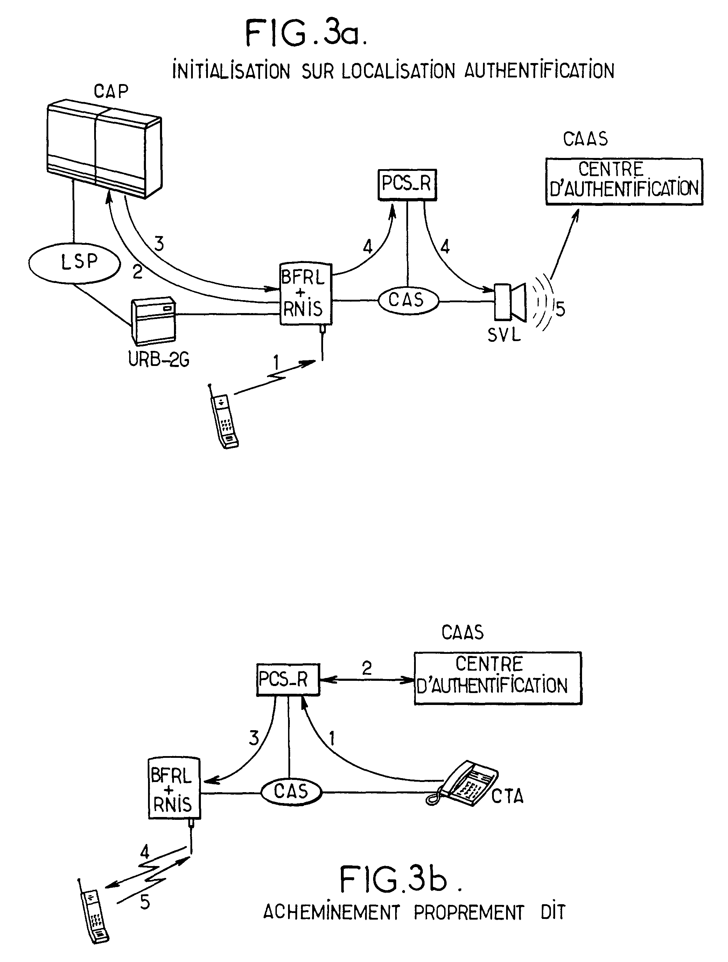

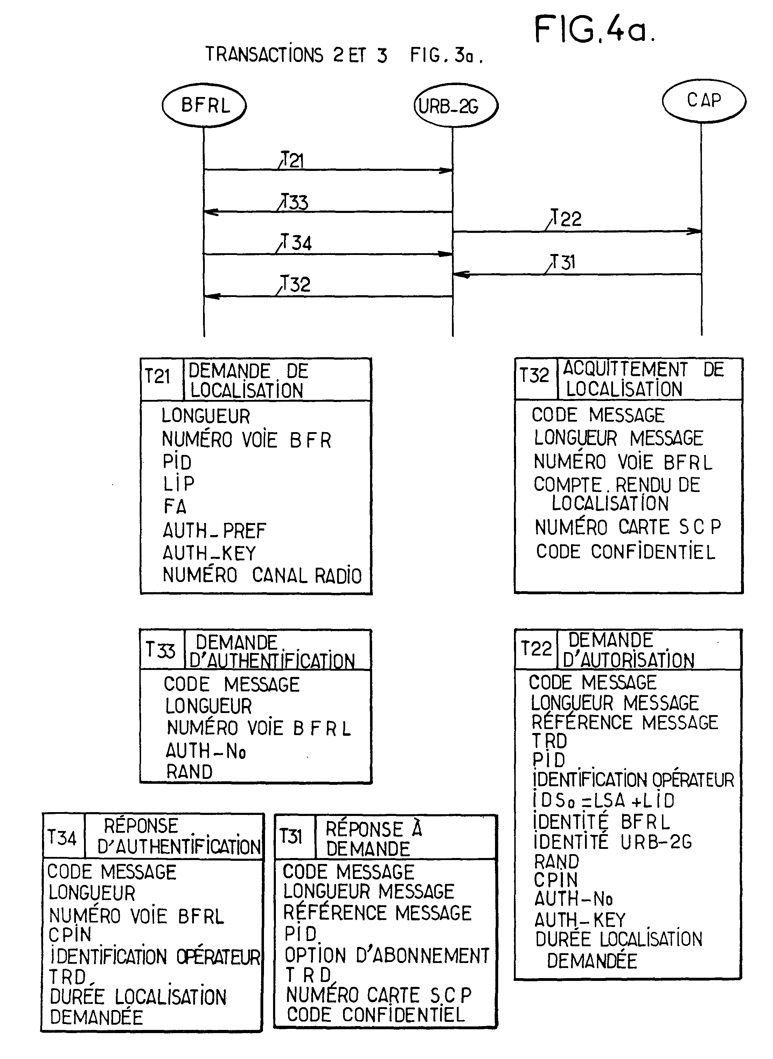

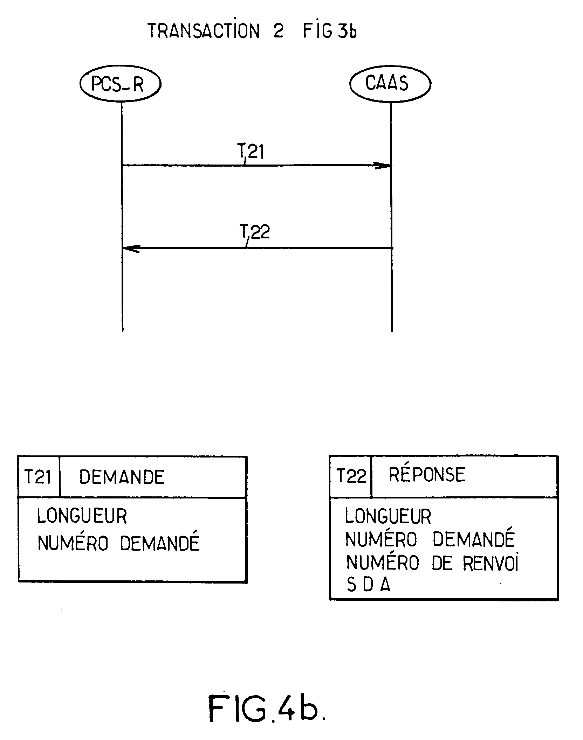

Une description plus détaillée des étapes d'initialisation sur localisation-authentification et d'acheminement proprement dit d'un appel entrant du protocole, objet de la présente invention, tel que représenté en figure 2, sera maintenant donnée en relation avec la configuration structurelle du réseau de téléphonie mobile et du réseau fixe tel que notamment le réseau RNIS, en référence avec les figures 3a et 3b.

Sur la figure 3a précitée, on a décrit les étapes successives permettant la mise en oeuvre de l'étape d'initialisation sur localisation-authentification représentée en figure 2, ces étapes successives étant décrites sous forme de transactions entre les différents éléments constitutifs des réseaux correspondants.

Sur la figure 3a précitée, les transactions peuvent par exemple être réalisées de la manière ci-après.
- transaction 1 : l'abonné mobile lance la procédure de localisation-authentification correspondant à l'étape 1000 de la figure 2. Cette opération peut être réalisée au niveau de l'ERR par actionnement de la ou des touches de localisation ERR.
- La transaction 1 précitée est alors suivie d'une transaction 2 entre la borne fixe radio BFR et le centre d'authentification CAP, transaction 2 au cours de laquelle le centre d'authentification précité procède effectivement à l'authentification de l'émetteur-récepteur radio ERR. Cette opération ne sera pas décrite en détail car elle correspond sensiblement à une opération de type classique.
- La transaction 2 précitée est suivie d'une transaction 3 au cours de laquelle le centre d'authentification CAP envoie à la borne fixe radio de localisation BFRL les données d'accès aux services SCP du réseau téléphonique commuté. La transaction 3 précitée correspond à l'étape 1001 de la figure 2.
- Cette transaction 3 est elle-même suivie d'une transaction 4 au cours de laquelle la borne fixe radio de localisation BFRL établit l'appel avec le serveur vocal de localisation SVL pour transmettre à ce dernier les paramètres d'accès aux services SCP précédemment mentionnés, le code confidentiel ainsi qu'un numéro SDA libre.
- La transaction 4 est suivie d'une transaction 5 au cours de laquelle le serveur vocal de localisation SVL enregistre la localisation de l'abonné mobile et transmet ces éléments au centre d'authentification d'accès aux services CAAS par la transaction 6 pour mémorisation.

Le mécanisme de localisation du service SCP peut alors être le suivant :
- définition d'une localisation par défaut, choisie au moment de la prise d'abonnement par l'abonné mobile aux services SCP ;
- indication par l'abonné mobile, lors d'un déplacement, à tout instant, du numéro de téléphone où celui-ci souhaite être joint. Pour ce faire, l'abonné mobile aux services SCP peut composer le code d'accès par le réseau RNIS pour entrer en communication avec le serveur vocal de localisation SVL et transmettre ainsi son numéro de carte ou d'identification, son code confidentiel ainsi que le numéro de téléphone sous lequel il souhaite être joint.

Le cas échéant, l'abonné mobile peut également indiquer une durée de localisation au-delà de laquelle la localisation par défaut redevient active.

Ainsi, ce mode opératoire est transparent pour l'abonné mobile, lequel indique seulement qu'il souhaite procéder à la localisation de son émetteur-récepteur radio ERR sous la borne fixe radio de localisation BFRL. Les données d'accès aux services SCP, numéro de carte, code confidentiel, sont alors stockées au niveau du centre d'authentification abonné mobile CAP. Le numéro de localisation est alors géré par la borne fixe radio de localisation BFRL, laquelle engendre ses propres numéros SDA et les associe à chaque abonné mobile qui a procédé à l'étape de localisation auprès de la borne fixe radio de localisation BFRL correspondante.

Bien entendu, le nombre de numéros SDA étant limité pour chaque borne fixe radio correspondante, la durée de localisation est limitée dans le temps.

En ce qui concerne la gestion des numéros SDA du réseau RNIS, on indique que chaque borne fixe radio BFR possède un ensemble de numéros SDA associés à ces deux canaux B, canaux spécifiques au réseau RNIS. Chaque numéro SDA est ainsi associé à un abonné mobile qui procède à une localisation sous la borne fixe radio correspondante.

Lorsque la borne fixe radio de localisation BFRL procède à la demande de localisation auprès du service SCP, c'est-à-dire lors de l'étape 1003 de la figure 2 au moyen des transactions 4, 5 et 6 précédemment mentionnées, une durée de localisation est déterminée. En effet, un numéro SDA est susceptible d'être utilisé pour un abonné procédant à une localisation lorsque ce numéro SDA n'est pas en cours d'utilisation pour un autre abonné mobile. Un numéro SDA redevient libre lorsque la localisation arrive à échéance temporelle, cette échéance temporelle pouvant être gérée par exemple par le mécanisme d'accès aux services SCP et par la borne fixe radio de localisation BFRL .

Sur la figure 3b, on a représenté l'étape d'acheminement proprement dit sous forme de transactions entre les différents éléments constitutifs du réseau.

Les différentes transactions comprennent une transaction 1 au cours de laquelle l'abonné du réseau téléphonique public commuté, à partir du combiné téléphonique CTA, compose le numéro de l'abonné mobile, cette transaction intervenant entre le combiné CTA et le point de commande de services PSC-R par l'intermédiaire du commutateur d'accès local aux services CAAS.

La transaction 1 précitée est suivie d'une transaction 2 au cours de laquelle le point de commande de services PSC-R interroge le centre d'authentification d'accès aux services CAAS, lequel a reçu tous les paramètres de localisation de l'abonné mobile correspondant au cours de la transaction 6 précédemment décrite en liaison avec la figure 3a.

La transaction 2 précitée est alors suivie d'une transaction 3 au cours de laquelle le réseau RNIS établit l'appel vers la borne fixe radio BFRL sur laquelle est localisé l'abonné mobile titulaire de l'émetteur-récepteur radio ERR correspondant. On rappelle que l'abonné mobile est titulaire, non seulement du numéro de téléphone d'appel d'abonné mobile, celui sous lequel celui-ci souhaite être appelé, mais également des paramètres d'accès aux services SCP.

A la suite de la transaction 3 précitée, une transaction 4 intervient au cours de laquelle la borne fixe radio de localisation correspondante BFRL procède en fait à la procédure d'appel de l'ERR à partir de la borne fixe radio précitée de localisation, cette transaction 4 correspondant à l'étape 1006 de la figure 2.

La transaction 4 précitée est alors suivie d'une transaction 5 au cours de laquelle, lorsque l'abonné mobile décroche, la borne fixe radio de localisation BFRL aboute les deux appels pour réaliser l'interconnexion.

Lorsqu'un numéro SDA d'une borne fixe radio de localisation BFRL arrive à échéance de l'intervalle de temps de localisation qui lui a été alloué, la borne fixe radio de localisation libère ce numéro SDA et peut par exemple assurer la mémorisation de ce dernier dans une liste des numéros à nouveau utilisables. Les organes de gestion du service SCP permettent alors également d'annuler la localisation du numéro téléphonique d'appel de l'abonné mobile sous la borne fixe radio de localisation BFRL et d'activer la localisation par défaut pour cet abonné. Aucune action vers le réseau téléphonique mobile n'est alors nécessaire.

Une description plus détaillée de la structure des messages constitutifs des transactions entre les différents éléments du réseau tels que représentés en figure 3a et 3b, sera maintenant donnée en liaison avec la figure 4a, correspondant à la figure 3a, et 4b correspondant à la figure 3b.

Dans l'ensemble des messages utilisés pour réaliser les transactions précitées, les différentes notations et sigles ont les significations ci-après :
- PID : numéro de série de l'émetteur-récepteur radio ERR,
- LID : numéro d'identification de l'opérateur,
- FA : numéro d'identification du service demandé,
- AUTH-PREF : message d'identification au réseau de la fonction que l'abonné mobile préfère utiliser,
- AUTH-KEY : identification des fonctions d'authentification disponibles dans l'émetteur-récepteur radio ERR,
- RAND : nombre aléatoire permettant de réaliser le processus d'identification,
- TRD : numéro d'abonné mobile,
- IDSO : code relatif à LID + FA précédemment définis,
- CPIN : résultat de l'authentification,
- IDAB : numéro d'abonné mobile semblable au numéro TRD précédemment défini.

Ainsi que représenté sur la figure 4a, les transactions 2 et 3 de la figure 3a sont représentées sous forme de messages successifs entre la borne fixe radio de localisation BFRL, l'unité de raccordement URB-2G correspondante et le centre d'authentification d'abonné mobile CAP.

La transaction 2 comprend les messages successifs T₂₁ entre borne fixe radio de localisation BFRL et T₂₂ entre l'unité de raccordement URB-2G et le centre d'authentification CAP.

Le message T₂₁ est un message de demande de localisation entre borne fixe radio de localisation BFRL et l'unité de raccordement URB-2G.

Le message T₂₁ comprend :
- un champ de longueur,
- un champ de numéro de voie de la borne fixe radio,
- un champ PID,
- un champ LID,
- un champ FA,
- un champ AUTH-PREF,
- un champ AUTH-KEY,
- ainsi qu'un champ de numéro de canal radio.

La transaction 2 comprend en outre un message T₂₂ entre l'unité de raccordement URB-2G et le centre d'authentification CAP.

Ce message T₂₂ est une demande d'autorisation formulée auprès du centre d'authentification CAP, ce message comprenant :
- un champ de code de message,
- un champ de longueur de messages, de référence messages,
- un champ TRD,
- un champ PID,
- un champ d'identification d'opérateur,
- un champ IDSO correspondant au champ LSA + LID,
- un champ identité de la borne fixe radio BFRL,
- un champ identité de la borne de raccordement URB-2G,
- un champ RAND,
- un champ CPIN,
- un champ relatif à la référence d'authentification, et
- un champ relatif à la clé d'authentification,
- ainsi qu'un champ de durée de localisation demandée pour le numéro SDA correspondant.

La transaction 3 comprend le message T₃₁ entre le centre d'authentification CAP et l'unité de raccordement URB-2G correspondante. Ce message T₃₁ est un message de réponse de localisation. Ce message comprend :
- un champ de code message,
- un champ de longueur message,
- un champ de référence message,
- un champ PID,
- un champ option d'abonnement,
- un champ TRD,
- un champ numéro de carte de service SCP,
- un champ code confidentiel.

La transaction 3 comprend également un message noté T₃₂ d'acquittement de localisation entre l'unité de raccordement URB-2G et la borne fixe radio de localisation BFRL. Ce message comprend :
- un champ de code message,
- un champ de longueur message,
- un champ de numéro de voie de la borne fixe radio de localisation BFRL,
- un champ de compte rendu de localisation,
- un champ de numéro de carte SCP,
- un champ de code confidentiel.

Outre le message T₃₂ précité, la transaction 3 comporte également un message T₃₃ de demande d'authentification, ce message étant transmis entre l'unité de raccordement URB-2G et la borne fixe de radio de localisation BFRL. Ce message comprend :
- un champ de code message,
- un champ de longueur message,
- un champ de numéro de voie de la borne fixe radio de localisation BFRL,
- un champ de numéro d'authentification,
- un champ RAND.

La transaction 3 comprend enfin un message de réponse d'authentification T₃₄ transmis entre la borne fixe radio de localisation BFRL et l'unité de raccordement URB-2G, ce message étant bien entendu envoyé en réponse au message de demande d'authentification T₃₃.

Le message T₃₄ comprend les champs :
- code de message,
- longueur de message,
- numéro de voie de la borne fixe radio de localisation BFRL
- champ CPIN,
- champ identification opérateur,
- champ TRD,
- champ durée de localisation demandée.

On comprend bien sûr qu'en ce qui concerne les différents messages de la transaction 3, les messages T₃₃ et T₃₄ sont temporellement antérieurs au message T₃₂, lequel constitue en fait le message d'acquittement de localisation.

Enfin, sur la figure 4b, on a représenté les messages constitutifs de la transaction 2 sur la figure 3b entre le point de commande service PCS-R et le centre d'authentification d'accès au service CAAS précédemment mentionné.

La transaction 2 de la figure 3b comprend, ainsi que représenté sur la figure 4b, un message T₂₁ de demande permettant en fait de véhiculer la demande d'appels entrants issue du combiné CTA.

Le message de demande T₂₁ comprend un champ de longueur et un champ de numéro demandé.

De même, la transaction 2 précitée comprend également un message de réponse, noté T₂₂, transmis entre le centre d'authentification d'accès au service CAAS et le point de commande de service PCS-R. Ce message T₂₂ est en fait un message de réponse comportant bien entendu un champ de longueur, un champ de numéro demandé et un champ de numéro de renvoi SDA, ces informations permettant bien entendu d'effectuer l'aboutement des deux appels au niveau de la borne fixe radio de localisation BFRL.

On a ainsi décrit un protocole d'acheminement local d'appels entrants du réseau téléphonique commuté dans un réseau cellulaire particulièrement performant dans la mesure où, grâce à l'utilisation de l'infrastructure d'un réseau numérique à intégration de services RNIS associé aux bornes fixes radio BFR d'un réseau de téléphonie mobile, le protocole objet de la présente invention permet de supprimer en fait des équipements spécifiques du réseau de téléphonie mobile pour assurer l'acheminement des appels entrants précités, cet acheminement étant alors géré au niveau local par des équipements existants du réseau fixe tel que le réseau RNIS précité.

Le protocole objet de la présente invention permet en particulier de supprimer l'effet *"trombone"* précédemment mentionné dans la description, la gestion d'un appel local pour un abonné mobile situé dans la même zone géographique que l'appel local étant, grâce à la mise en oeuvre du protocole d'acheminement d'appels entrants, objet de la présente invention, réalisé à l'échelon local grâce à la mise en oeuvre des éléments structurels du réseau RNIS correspondant.

## Revendications

1. Protocole d'acheminement local d'appels entrants engendrés par le combiné téléphonique d'un abonné du réseau public commuté dans un réseau de téléphonie cellulaire, ce combiné étant interconnecté à une unité d'accès au réseau de téléphonie mobile constituée par un commutateur d'accès local aux services d'un réseau numérique à intégration de services, ce réseau téléphonique cellulaire comportant au moins un émetteur-récepteur abonné mobile muni d'un numéro d'appel téléphonique, vers lequel l'appel entrant est adressé, et une pluralité de bornes fixes radio interconnectées en grappes selon une structure arborescente à des unités de raccordement (URB - 2G) et à un centre d'authentification d'abonné mobile (CAP) par des lignes de transmission numérique spécialisées, lesdites bornes fixes radio étant munies de canaux de transmission en radiotéléphonie cellulaire, de service de communications personnelles du réseau téléphonique commuté et de la fonction de sélection directe à l'arrivée (S.D.A.) du réseau numérique à intégration de services, et étant en outre chacune reliée à un centre d'authentification d'accès aux services par l'intermédiaire du commutateur d'accès local aux services (CAS), d'un point de commande de services (PSC-R) et d'un serveur vocal de localisation (SVL), ledit émetteur-récepteur abonné mobile étant en outre équipé de moyens d'accès au service de communications personnelles du réseau téléphonique commuté à partir d'un numéro d'identification et d'un code confidentiel, le numéro d'appel téléphonique, le numéro d'identification et le code confidentiel étant attribués audit émetteur-récepteur abonné mobile, **caractérisé en ce que** ce protocole consiste à :
- effectuer à partir dudit émetteur-récepteur abonné mobile une procédure de localisation-authentification de cet émetteur-récepteur, par l'intermédiaire du réseau de téléphonie mobile et du centre d'authentification d'abonné mobile, et, sur localisation authentification dudit émetteur-récepteur abonné mobile,
- transmettre à ladite borne fixe radio de localisation, à partir du centre d'authentification d'abonné mobile, les données d'abonnement au service de communication personnelle, numéro d'identification et code confidentiel dudit émetteur-récepteur abonné mobile ;
- attribuer en outre, au niveau de ladite borne fixe radio, audit émetteur-récepteur abonné mobile, un numéro libre de sélection directe à l'arrivée (SDA), le numéro de sélection directe à l'arrivée (SDA) attribué étant associé à cet émetteur-récepteur abonné mobile ;
- transmettre audit centre d'authentification d'accès aux services, par l'intermédiaire du serveur vocal de localisation, à partir de la borne de localisation, le numéro de sélection directe à l'arrivée attribué, le numéro d'identification et le code confidentiel, l'adresse de la borne fixe radio de localisation associée audit émetteur-récepteur abonné mobile étant mémorisée au niveau dudit centre d'authentification d'accès aux services, et, sur appel entrant du numéro d'appel téléphonique de cet émetteur-récepteur abonné mobile engendré par ce combiné téléphonique d'un réseau public commuté vers le point de commande de services (PCS-R) :
- transmettre du point de commande de services (PCS-R) vers le centre d'authentification d'accès aux services un message d'interrogation comportant au moins ledit numéro téléphonique de l'émetteur-récepteur abonné mobile ;
- transmettre, sur réception de ce message d'interrogation, à partir dudit centre d'authentification d'accès aux services, par l'intermédiaire du point de commande de services (PCS-R) un message d'appel contenant au moins ledit numéro de sélection directe à l'arrivée (SDA) attribué vers ladite borne fixe radio de localisation ;
- effectuer à partir de ladite borne fixe radio de localisation une procédure d'appel dudit émetteur-récepteur abonné mobile ; et, sur réponse de l'abonné mobile
- établir la communication avec le combiné téléphonique, ce qui permet de confiner la transaction entre le combiné téléphonique et l'émetteur-récepteur abonné mobile au seul réseau géré par le commutateur d'accès local aux services du réseau numérique à intégration de services.

2. Protocole selon la revendication 1, **caractérisé en ce que** l'étape d'attribution au niveau de la borne fixe radio, à l'émetteur-récepteur abonné mobile d'un numéro libre de sélection directe à l'arrivée (SDA) est temporaire, chaque numéro libre de sélection directe à l'arrivée étant attribué à un émetteur-récepteur abonné mobile pour une durée déterminée.

3. Protocole selon l'une des revendications 1 ou 2, **caractérisé en ce que** l'étape au cours de laquelle le centre d'authentification (CAP) envoie à la borne fixe radio de localisation (BFRL) les données d'accès aux services est réalisée par l'envoi d'un message de réponse à demande de localisation comportant au moins un champ de code message, un champ de longueur message, un champ de référence message, un champ numéro de série de l'émetteur-récepteur radio ERR, un champ option d'abonnement, un champ numéro de carte de service de communication personnelle, un champ de code confidentiel.

4. Protocole selon l'une des revendications 1 à 3, **caractérisé en ce que** l'étape de transmission vers le centre d'authentification d'accès au service, à partir du point de commande de services, d'un message d'interrogation est réalisée par l'envoi d'un message de demande comportant au moins un champ de longueur et un champ de numéro demandé.

## Claims

1. A protocol for local routing of incoming calls which are generated by the telephone handset of a subscriber of the public switched telephone network in a cellular mobile telephone network, said telephone being interconnected to a unit for access to said cellular mobile telephone network, said unit consisting of a switch for local access to the services of an integrated services digital network, said cellular mobile telephone network including at least one mobile subscriber transmitter/ receiver complete with a telephone call number, for which the incoming call is intended, and a plurality of fixed radio terminals interconnected in clusters according to a tree structure to connected units (TCU - 2G) and to a mobile subscriber authentication centre (PAC) by dedicated digital transmission lines, said fixed radio terminals being equipped with cellular radio telephone transmission channels, with a personal communications service of said public switched telephone network and with a direct inward dialling (D.I.D.) function of the integrated services digital network, and each fixed radio terminal furthermore being linked to a service access authentication centre via a local service access switch (SAS), a service control point (SCP-R) and a voice locating server (VLS), said mobile subscriber transmitter/receiver furthermore being equipped with means for access to a personal communications service of said public switched telephone network on the basis of an identification number and of a confidential code, said telephone call number, said identification number and said confidential code being attributed to said mobile subscriber transmitter/receiver, **characterized in that** this protocol consists in:
- implementing a procedure, from said mobile subscriber transmitter/receiver, for locating/authenticating this transmitter/receiver, via said cellular mobile telephone network and said mobile subscriber authentication centre, and, upon said mobile subscriber transmitter/receiver being located and authenticated,
- forwarding, from said mobile subscriber authentication centre to the said fixed radio locating terminal, said personal communication service subscription data, identification number and confidential code of said mobile subscriber transmitter/receiver;
- furthermore, within said fixed radio terminal, attributing to said mobile subscriber transmitter/receiver a free direct inward dialling (DID) number, the attributed direct inward dialling (DID) number being associated with said mobile subscriber transmitter/receiver;
- forwarding, from said locating terminal to said service access authentication centre, via said voice locating server, said attributed direct inward dialling number, said identification number and said confidential code, the address of the fixed radio locating terminal associated with said mobile subscriber transmitter/receiver being stored in memory within said service access authentication centre, and, upon an incoming call for the telephone call number of said mobile subscriber transmitter/receiver generated by said telephone handset of said public switched telephone network to said service control point (SCP-R):
- forwarding, from said service control point (SCP-R) to said service access authentication centre, an interrogation message including at least said telephone number of said mobile subscriber transmitter/receiver;
- upon reception of said interrogation message, forwarding, to said fixed radio locating terminal, from said service access authentication centre, via said service control point (SCP-R), a call message containing at least said direct inward dialling (DID) number attributed;
- from said fixed radio locating terminal, implementing a procedure of calling said mobile subscriber transmitter/receiver, and upon mobile subscriber transmitter/receiver responding
- establishing communication with said telephone handset, thereby allowing to confine the transaction between said telephone handset and said mobile subscriber transmitter/receiver only to a sub-network handled by a switch for local access to services of said integrated services digital network.

2. The protocol of Claim 1, **characterized in that** the step, within said fixed radio terminal, of attributing a free direct inward dialling (DID) number to said mobile subscriber transmitter/receiver is temporary, each free direct inward dialling number being thus attributed to a mobile subscriber transmitter/receiver for a defined duration.

3. The protocol of Claim 1 or 2, **characterized in that** the step in the course of which said authentication centre (PAC) sends the service access data to said fixed radio locating terminal (FRLT) is implemented by sending of a message in response to a locating request including at least a message code field, a message length field, a message reference field, a radio transmitter/receiver (RTR) serial number field, a subscription option field, a personal communication service card number field and a confidential code field.

4. The protocol of one of Claims 1 to 3 **characterized in that** the step of forwarding from said service control point to said service access authentication centre an interrogation message is implemented by sending a request message including at least a length field and a number-requested field.

## Patentansprüche

1. Protokoll zur lokalen Leitweglenkung für ankommende Anrufe, die vom Telefonapparat eines öffentlichen Telefonnetz-Teilnehmers ausgehen, in einem zellularen Telefonnetz, wobei dieser Apparat an eine Mobiltelefonnetz-Zugangseinheit angeschlossen ist, die durch eine Vermittlungsstelle zum lokalen Zugang zu den Diensten eines digitalen Diensteintegrationsnetzes gebildet ist, wobei dieses zellulare Telefonnetz wenigstens einen mobilen Sender-Empfänger-Teilnehmer umfasst, der mit einer Telefonrufnummer versehen ist, an die der ankommende Anruf gerichtet ist, sowie eine Mehrzahl von festen Funkstationen, die clusterförmig gemäß einer Baumstruktur mit Verbindungseinheiten (URB-2G) and mit einem Mobilteilnehmerauthentifizierungszentrum (CAP) mittels spezieller Digitalübertragungsleitungen verbunden sind, wobei die festen Funkstationen versehen sind mit Kanälen zur zellularen Funktelefonübertragung, für persönliche Kommunikationsdienste des öffentlichen Telefonnetzes und für die Direktwahlfunktion bei Ankunft (S.D.A.) aus dem digitalen Diensteintegrationsnetz, und wobei sie ferner jeweils mit einem Dienstezugangsauthentifizierungszentrum verbunden sind mittels der lokalen Dienstezugangsvermittlungsstelle (CAS), eines Dienstesteuerpunktes (PSC-R) und eines Lokalisierungssprachservers (SVL), wobei der mobile Sender-Empfänger-Teilnehmer ferner ausgestattet ist mit Mitteln zum Zugang zum persönlichen Kommunikationsdienst des öffentlichen Telefonnetzes ausgehend von einer Identifizierungsnummer und einem vertraulichen Code, wobei die Telefonnummer, die Identifizierungsnummer und der vertrauliche Code dem mobilen Sender-Empfänger-Teilnehmer zugewiesen sind, **dadurch gekennzeichnet, dass** das Protokoll aus den folgenden Schritten besteht:
- Durchführen, ausgehend vom mobilen Sender-Empfänger-Teilnehmer, eines Verfahrens zur Lokalisierung-Authentifizierung dieses Sender-Empfängers mittels des mobilen Telefonnetzes und des Mobilteilnehmerauthentifizierungszentrums, und, bei Lokalisierung-Authentifizierung des mobilen Sender-Empfänger-Teilnehmers,
- Übertragen der Daten über die Teilnahme am persönlichen Kommunikationsdienst, der Identifizierungsnummer und des vertraulichen Codes des mobilen Sender-Empfänger-Teilnehmers an die feste Lokalisierungs-Funkstation ausgehend vom Mobilteilnehmerauthentifizierungszentrum;
- ferner Zuweisen der freien Nummer zur Direktwahl bei Ankunft (SDA) an den mobilen Sender-Empfänger-Teilnehmer im Bereich der festen Funkstation, wobei die zugewiesene Nummer zur Direktwahl bei Ankunft (SDA) diesem mobilen Sender-Empfänger-Teilnehmer zugeordnet ist;
- Übertragen der zugewiesenen Nummer zur Direktwahl bei Ankunft, der Identifizierungsnummer und des vertraulichen Codes an das Dienstezugangsauthentifizierungszentrum ausgehend von der Lokalisierungsstation mittels des Lokalisierungssprachservers, wobei die Adresse der festen Lokalisierungs-Funkstation, die dem mobilen Sender-Empfänger-Teilnehmer zugeordnet ist, im Bereich des Dienstezugangsauthentifizierungszentrums gespeichert ist, und bei einem ankommenden Anruf für die Telefonnummer dieses mobilen Sender-Empfänger-Teilnehmers, der durch diesen Telefonapparat eines öffentlichen Netzes zum Dienstesteuerpunkt (PCS-R) getätigt wurde:
- Übertragen einer Anfragenachricht, umfassend wenigstens die Telefonnummer des mobilen Sender-Empfänger-Teilnehmers, vom Dienstesteuerpunkt (PCS-R) zum Dienstezugangsauthentifizierungszentrum;
- Übertragen einer Rufnachricht, umfassend wenigstens die zugewiesene Nummer zur Direktwahl bei Ankunft (SDA) an die feste Lokalisierungs-Funkstation bei Empfang dieser Anfragenachricht ausgehend vom Dienstezugangsauthentifizierungszentrum mittels des Dienstesteuerpunkts (PCS-R);
- Durchführen eines Verfahrens zum Anrufen des mobilen Sender-Empfänger-Teilnehmers ausgehend von der festen Lokalisierungs-Funkstation; und, bei Antwort des Mobilteilnehmers
- Herstellen der Verbindung zum Telefonapparat, was eine Begrenzung der Transaktion zwischen dem Telefonapparat und dem mobilen Sender-Empfänger-Teilnehmer einzig auf das Netz ermöglicht, das von der Vermittlungsstelle zum lokalen Zugang zu den Diensten des digitalen Diensteintegrationsnetzes gesteuert wird.

2. Protokoll nach Anspruch 1,
**dadurch gekennzeichnet, dass** der Schritt der Zuweisung einer freien Nummer zur Direktwahl bei Ankunft (SDA) an den mobilen Sender-Empfänger-Teilnehmer im Bereich der festen Funkstation temporär ist, wobei jede freie Nummer zur Direktwahl bei Ankunft einem mobilen Sender-Empfänger-Teilnehmer für eine begrenzte Dauer zugewiesen wird.

3. Protokoll nach einem der Ansprüche 1 oder 2,
**dadurch gekennzeichnet, dass** der Schritt, in dessen Verlauf das Authentifizierungszentrum (CAP) der festen Lokalisierungs-Funkstation (BFRL) die Dienstezugangsdaten schickt, durch Senden einer Lokalisierungsanfrage-Anwortnachricht erfolgt, umfassend wenigstens ein Nachrichtencodefeld, ein Nachrichtenlängefeld, ein Nachrichtenreferenzfeld, ein Feld für die Seriennummer des Funksenders-Empfängers ERR, ein Teilnahmeoptionsfeld, ein Feld für die Kartennummer des persönlichen Kommunikationsdienstes sowie ein Feld für den vertraulichen Code.

4. Protokoll nach einem der Ansprüche 1 bis 3,
**dadurch gekennzeichnet, dass** der Schritt der Übertragung einer Anfragenachricht an das Dienstezugangsauthentifizierungszentrum ausgehend vom Dienstesteuerpunkt durch Senden einer Fragenachricht erfolgt, umfassend wenigstens ein Längenfeld und ein Feld für die gewünschte Nummer.
